# EUROPEAN PATENT SPECIFICATION

(11) **EP 4 419 750 B1**
(45) Date of publication and mention of the grant of the patent: **18.06.2025**
(21) Application number: 22793682.0
(22) Date of filing: 19.09.2022
(51) Int. Cl.: E02B 15/04

(54) **PARAVANE FOR A BARRIER TOWED BY A VESSEL**
PARAVAN FÜR EINE VON EINEM SCHIFF GEZOGENE BARRIERE
PARAVANE POUR BARRIÈRE REMORQUÉE PAR UN NAVIRE

(30) Priority: 18.10.2021 NO 20211249
(43) Date of publication of application: 28.08.2024
(73) Proprietor: Nofi AS, 9105 Kvaløya (NO)
(72) Inventor: NILSEN, Dag Hjalmar, 9106 Straumsbukta (NO); OLSEN, Erlend Jarl, 9102 Kvaløya (NO); PEDERSEN, Birgit, 9009 Tromsø (NO)
(74) Representative: Onsagers AS
(86) International application number: PCT/EP2022/075927
(87) International publication number: WO 2023/066578

(56) References cited:
- EP-A1- 3 185 679
- JP-A- 2011 067 182

## Description

### FIELD OF THE INVENTION

The present invention relates to a paravane for a barrier towed by a vessel. The present invention also relates to a barrier system towable by a vessel. The present invention also relates to a method for deploying a barrier from a boom reel. The present invention also relates to a method for retrieving a barrier from water.

### BACKGROUND OF THE INVENTION

An oil boom system is a system for containing or collecting oil floating on top of a water body. The oil boom system comprises a typically U-shaped or V-shaped barrier towed behind one or several vessels, wherein the oil spill is collected at the apex of the barrier. The barrier comprises a floating body and possibly also a skirt suspended into the water body below the floating body.

WO 2000034589 describes an oil boom system for collecting oil spill on water whereby e.g. one end of an oil boom is towed from the shore of a watercourse with flowing water e.g. a river, at an angle to the water current, to a suitable position in the watercourse, using a waterborne current rudder. The current rudder is secured to one end of a line, the other end of the line is secured to an upstream point ashore, allowing the current rudder to move out into the stream and to maintain one end of the oil boom in a suitable position in the watercourse, while the other end of the oil boom is secured to a downstream point ashore, where an oil recovery device is positioned. The current rudder is fitted with a balance rudder operated by a line or a remote control from shore, allowing the current rudder and the oil boom end attached thereto, to be recovered to shore when so required.

WO 2010126426 describes a method for applying a dispersant or other substances to a water surface. Significant for the method that a nozzle hose system is used, said system comprising a hose or a set of hoses, that the hose or set of hoses is elevated at both ends, that one end of the hose or set of hoses is based at an operation unit, and that the other end of the hose or set of hoses is connected to a paravane that is towed by or connected to the operation unit.

A paravane is commercially available under the name BoomVane^{®} by the applicant of the above publications WO 2000034589 and WO 2010126426.

EP 3185679 describes a paravane for floating barrier. The paravane has at least one foil with a first side, a second side, a leading end, a trailing end, a top and a bottom, wherein at least one foil is straight and at least one second foil is curved, where one side of the straight foil and the other side of the curving foil are interconnected by a number of stays, where at least one foil is connected at the top to at least a first buoyant body and that at least the one plane at the bottom is connected to at least one ballast element, and that at the second side of the straight foil there are at least one towing line and a tow eye by which there is achieved a paravane that can keep an arrangement of lines, nets, floats in a water body in a position suitable for performing the task.

WO 2016/029915 describes a paravane for floating barrier including at least one foil with a first side, a second side, a leading end, a trailing end, a top and a bottom, wherein at least one foil is straight and at least one second foil is curved, where one side of the straight foil and the other side of the curving foil are interconnected by a number of stays, where at least one foil is connected at the top to at least a first buoyant body and that at least the one plane at the bottom is connected to at least one ballast element, and that at the second side of the straight foil there are at least one towline and a tow eye by which there is achieved a paravane that can keep an arrangement of lines, nets, floats in a water body in a position suitable for performing the task.

JP 2002315472 describes a net-extender for trolling, attached to the midway of a towing rope as well as a conventional Otter board by using a flexible net-extender. The net-extending body has a rigid member arranged at the upstream side and a flexible net-extender joined to the rigid member and arranged at the downstream side.

JP 2011067182 describes a fishnet expander capable of improving fishnet-expanding performance, and to provide a trawl fishing including the same. The fishnet expander is such that a warpage is formed at a blade part and the efflux port of a ridge part is formed on the end opposite to an influx port in the first direction of the ridge part, thus markedly improving lifting force acting on the blade part as compared with conventional cases and securing the shape stability of the blade part in towing.

JP S5518959 U describes another type of paravane.

The object of the present invention is to provide an improved paravane for a barrier.

The object of the present invention is also to provide a floating barrier system which may utilize the properties of the improved paravane.

A further object of the present invention is to provide a method for deploying a barrier and a paravane to a water body and to retrieve the barrier and the paravane from a water body.

In particular, the object is to provide an improved paravane for a barrier, a floating barrier system and a method for deploying or retrieving the barrier and the paravane which achieves increased efficiency, and which achieves reduced risk for personal injuries.

### SUMMARY OF THE INVENTION

The present invention relates to a paravane for a barrier towed by a vessel, wherein the paravane comprises:
- a floating body;
- a main skirt suspended below the floating body, wherein the main skirt is defined with a longitudinal direction between its front end and its rear end;
- an upper lamella having a first point secured to the front end of the main skirt, a second point secured to the rear end of the main skirt and a third point provided at a distance from the main skirt;
- a lower lamella having a first point secured to the front end of the main skirt below the upper lamella, a second point secured to the rear end of the main skirt below the upper lamella and a third point provided at a distance from the main skirt;
- a front towing interface connected to the third point of the upper lamella and the third point of the lower lamella;

wherein the floating body, the main skirt, the upper lamella and the lower lamella are made of one or more flexible materials;
wherein the upper lamella has a skirt facing edge defined as the edge between the first point and the second point, wherein the skirt facing edge is secured continuously or at intervals to the main skirt;
wherein the paravane comprises a plurality of stiffening plates fastened to the main skirt;
wherein the paravane comprises at least one intermediate lamella having a first point secured to the front end of the main skirt between the upper lamella and the lower lamella, a second point secured to the rear end of the main skirt between the upper lamella and the lower lamella and a third point provided at a distance from the main skirt, wherein the third point is connected to the front towing interface;
characterized in that:
   - the paravane comprises a plurality of stiffening plates fastened to the main skirt;
   - the stiffening plates have a height being lower than a height between the lamellae;
   - the stiffening plates are fastened to the main skirt between the lamellae.

In one aspect, the lower lamella has a skirt facing edge defined as the edge between the first point and the second point, wherein the skirt facing edge of the lower lamella is secured continuously or at intervals to the main skirt.

In one aspect, the one or more flexible materials comprises fabrics.

In one aspect, the floating body is an inflatable floating body. The material of the floating body may be fabrics consisting of a reinforcement weave covered on one or both sides with thermoplastics like polyurethane, polyvinyl chloride, etc. or rubber, nitrile, etc.

In one aspect, the floating body has two layers of material, one airtight inner bladder and a mechanically strong outer fabric.

In one aspect, the main skirt is made of a non-permeable material.

In one aspect, the main skirt is made of reinforcement weave covered on one or both sides with thermoplastics like polyurethane, polyvinyl chloride, etc., or rubber, nitrile etc.

In one aspect, the main skirt is made of two fabrics which are joined together. The term "joined together" here refers to joining processes such as welding, gluing, vulcanizing, or sewing etc.

In one aspect, the upper lamellae and/or the lower lamellae are at least partially made of a permeable material.

In one aspect, the upper lamellae and/or the lower lamellae are at least partially made of a perforated fabric, a net fabric or a net structure etc.

In one aspect, the stiffening plates are built into the main skirt between two layers of fabric, wherein the fabric of the main skirt around the stiffening plates are formed by joining the fabrics together.

In one aspect, the stiffening plates are fastened directly to the main skirt only on one side. In another aspect, some stiffening plates are fastened to one side and some stiffening plates are fastened to the other side of the main skirt.

In one aspect, the stiffening plates are located at a first distance from each other in a first direction.

The first distance is sufficiently long to allow folding of the main skirt.

In one aspect, the main skirt is provided with a number of first folding lines defined by the first distance between the stiffening plates.

In one aspect, the stiffening plates are located at a second distance from each other in a second direction different from the first direction.

The second distance is sufficiently long to allow folding of the main skirt.

In one aspect the respective third corners of the upper and lower lamellas are gathered in one single point.

In one aspect, the main skirt is provided with a number of second folding lines defined by the second distance between the stiffening plates.

In one aspect, the plurality of stiffening plates is arranged in a grid with rows and columns.

In one aspect, the stiffening plates are inserted into pockets in the main skirt.

In one aspect, the stiffening plates are rectangular or square. Preferably, its corners are rounded, to prevent damages to the fabric of the main skirt, the lamella and/or other parts of the paravane. Alternatively, the stiffening plates may be triangular, polygonal, circular or semi-circular. Preferably, the stiffening plates are of the same size and shape. However, they may also be of different sizes and different shapes.

In one aspect, the stiffening plates are made of 2 - 20mm thick polyethylene plates.

In one aspect, the paravane comprises a rear towing interface provided in the rear end of the floating body and/or in the rear end of the main skirt.

In one aspect, the rear towing interface comprises several connection points located continuously or at intervals between the rear top part of the floating body and the rear bottom part of the main skirt.

In one aspect, the rear towing interface is connected directly to the first end of the barrier. In this way, the paravane may be considered to be integrated with the barrier.

In one aspect, the front towing interface is connectable to the vessel and to a first end of the barrier. This may be the only towing interface needed for connecting the paravane to the vessel and to the first end of the barrier.

In one aspect, the front towing interface is connectable to the vessel, while the rear towing interface is connectable to the first end of the barrier.

In one aspect, the front towing interface is connected to the vessel via the first towing line and the first end of the barrier is connected to the front towing interface via a first additional towing line. In one aspect this first additional towing line is a bridle consisting of multiple lines for proper transfer of forces to the barrier. In one aspect this bridle consists also of a fabric.

In one aspect, the front towing interface is connected to the vessel via the first towing line and a second additional towing line, while the first end of the barrier is connected to the first towing line via the first additional towing line.

In this way, the paravane will be towed at a distance from the first end of the barrier. Hence, it is achieved that turbulence caused by the paravane being towed will occur outside of the barrier, i.e. the paravane will not cause turbulence inside the barrier, which will negatively impact for example oil spill collection.

Optionally, the rear towing interface may be connected to the barrier by means of an elastic towing line. Preferably, this elastic towing line is connected to the barrier a distance from where the first additional towing line is connected. It should be noted that the elastic towing line does not contribute during towing, its only purpose is to prevent the paravane from turning into the barrier opening in the initial towing phase, during stops in the towing or during deployment. Hence, the elastic towing line is preventing a wrong starting position for the paravane.

Optionally, a utility line with or without elastic properties may be connected to front of the floating body and or to the front of the skirt. The other end of the utility line may be fastened to one or several fixed points in first towing line. It should be noted that the utility rope does not contribute during towing, its only purpose is to enable optimal position during retrieval over a dock edge or over the stern on a vessel.

In one aspect, the respective third corners of the upper, intermediate and lower lamellas are gathered in one single point.

In one aspect, the lamellas have a first or leading edge, defined as the edge between the first point and the front towing interface. In one aspect, the leading edge is curved. In one aspect, the leading edge is tensioned during the towing operation. In one aspect the leading edge is provided with a semi-stiff flotation member ensuring that the front towing interface is kept at surface level and at a distance from the floating body to ensure correct tow starting position.

In one aspect, the lamellae have a second or trailing edge, defined as the edge between the second point and the front towing interface. In one aspect, the trailing edge is curved. In one aspect, the trailing edge is tensioned during the towing operation. In one aspect, the trailing edges is reinforced by a rope, webbing etc. to transfer forces to the rear towing interface.

In one aspect, the lamellas have a substantially triangular shape, wherein the first, second and third points are forming corners of the substantially triangular shape. Alternatively, the lamellas may comprise a fourth point provided at a distance from the main skirt. Preferably, this fourth point is also connected to the front towing interface. In this case the interface between the third and fourth point and FTI may be through a bridle consisting of two or more lines.

In one aspect, the lamellae are non parallel.

In one aspect, the floating body is an elongated floating body defined with a longitudinal direction between its front end and its rear end.

In one aspect, the front end of the floating body projects a distance from the front end of the main skirt.

In one aspect, the paravane comprises an intermediate skirt connected between the floating body and the main skirt, wherein a front distance between the front end of the main skirt and the floating body is longer than a rear distance between the rear end of the main skirt and the floating body.

According to the above, the leading edge is lower than a trailing edge. Hence, the lamella will pull the paravane downwardly in the water during use, preventing the paravane from collapsing or surfacing.

Alternatively, this can be achieved by connecting the main skirt directly to the floating body while securing the first point of the lamellas to the main skirt at a point lower than the second point.

In one aspect, the longitudinal direction of the main skirt is aligned with the longitudinal direction of the floating body. The longitudinal direction of the main skirt may be substantially parallel with the longitudinal direction of the floating body.

In one aspect, the paravane comprises a skirt ballast secured to the lower end of the main skirt. In one aspect, the paravane comprises a lamella ballast secured to the lower lamella. In one aspect, the skirt ballast and the lamella ballast comprise a weight line, i.e. a line to which a number of weight elements, such as lead elements or other denser than water elements. The skirt ballast and the lamella ballast may be connected to or integrated with the skirt and lamellae respectively.

The present invention also relates to a barrier system towable by a vessel, wherein the barrier system comprises:
- a barrier having a first end and a second end, wherein the second end is connectable to the vessel;
- a paravane as defined above, wherein the front towing interface is connectable to the vessel;
wherein the first end of the barrier is either connected to the front towing interface of the paravane or to a rear towing interface of the paravane.

In one aspect, the first end of the barrier and the second end of the barrier is connectable to the same side of the vessel.

In one aspect, the barrier system comprises a boom reel from which the barrier system is reeled out from and reeled onto. In one aspect, the boom reel is located on the vessel.

In one aspect, the paravane may be reeled onto the core of the reel with the barrier reeled outside the paravane. In one aspect the paravane may be reeled radially outside of the barrier.

According to the above, it is achieved that the barrier can be towed by one vessel only while still maintaining the opening of the barrier, defined as the distance between the first end and the second end of the barrier, sufficiently large. This is achieved by the paravane being able to pull the first end sideways out from a vessel direction.

In one aspect, the barrier system comprises towing lines to provide a distance between the vessel and the paravane, and between the vessel and the barrier.

In one aspect, the barrier system comprises a drag anchor secured to an apex of the barrier.

The present invention also relates to a method for deploying a barrier from a boom reel, wherein the method comprises the following steps:
- reeling out the barrier from a boom reel by pulling an apex of the barrier away from the boom reel;
- reeling out a first end and a second end of the barrier;
- inflating the barrier;
- reeling out a paravane as defined above from the boom reel, wherein the first end of the barrier is connected to a front towing interface of the paravane or to a rear towing interface of the paravane;
- inflating a floating body of the paravane;
- reeling out a first and second towing lines from the boom reel, wherein the first towing line is connected to the front towing interface of the paravane and wherein the second towing line is connected to the second end of the barrier.

In one aspect, the method further comprises the initial step of:
- providing the boom reel on a vessel;
- connecting a drag anchor to the apex of the barrier;
- releasing the drag anchor into the water;
- controlling the vessel to move, thereby causing the drag anchor to reel out the barrier from the boom reel.

In one aspect, the method further comprises the step of:
- disconnecting the first towing line and the second towing line from the boom reel;
- connecting the first towing line and the second towing line to the vessel hull.

Further the method comprises retrieving the barrier system from the water to the vessel in the opposite way.

According to the above, it is further achieved that the barrier can be towed outside of a turbulence area behind the vessel. This is an advantage when the barrier is used as an oil boom for collecting oil spill, wherein it is important that the oil spill is floating on top of the water body. In the turbulence area, the oil spill tends to mix with the water, and is hence more difficult to collect.

According to the above, the paravane may be reeled out from and reeled onto a boom reel together with the barrier and towing lines. Hence, the deployment and retrieval of the paravane become more efficient, as less time and less equipment are needed. Hence, the deployment and retrieval will involve less operations which may reduce risk exposure to personnel. In particular, there is no need for a paravane deployment crane for lifting the paravane from the vessel and into the water and for lifting the paravane from the water and up to the vessel. The lifting operation by means of such paravane deployment cranes represents a considerable HSE risk.

The object of the invention is to provide a paravane for a barrier where the paravane may be reeled inside the barrier on a reel which compared to known technology reduce deployment time, reduce retrieval time, reduce operation complexity, reduce risk for personnel and eliminate the need for a paravane deployment crane on the vessel.

In addition, there is no need for a separate storage area for the paravane, as the paravane is now stored on the boom reel together with the towing lines and barrier.

As a further consequence, a smaller vessel without suitable located cranes may be used for handing the barrier system.

### Definitions

The term "towing line" is used herein for any type of flexible line used for towing purposes, such as a rope, a wire, a chain, webbing etc.

The term "barrier" is used herein for any type of element being used to separate one element from other elements, the other elements typically being water. The barrier may be used to separate floating or semi-floating garbage from water, such a barrier may be referred to as a garbage collector. The barrier may be used to concentrate and or separate oil spill from water, such a floating barrier may be referred to as an oil boom or active oil boom. The barrier may be used to separate aquatic organisms from water, such a barrier may be referred to as a fishing net, a trawl etc. The barrier may be a floating barrier, a partially floating barrier, or a submerged barrier.

The term "paravane" is used herein for a device being able to control a first end of a barrier to be separated from a second end of the barrier when the barrier is towed by a vessel. The paravane is a non-motorized device.

The term "flexible" is herein referring to the property of being capable of bending without breaking. The term "bending without breaking" is here used relative to the outer diameter of the core of the boom reel, wherein something is considered to be flexible if it may be reeled onto and reeled out from the boom reel without breaking. The core of the boom reel is a cylindrical object having a diameter which is typically between 20 cm to 100 cm.

### DETAILED DESCRIPTION

Embodiments of the present invention will now be described in detail with reference to the enclosed drawings, wherein:
Fig. 1 illustrates a top view of a floating barrier system towed by a vessel;
Fig. 2 illustrates a perspective front view of the paravane in fig. 1;
Fig. 3 illustrates a perspective rear view of the paravane in fig. 1;
Fig. 4 illustrates a top view of the paravane in fig. 1;
Fig. 5 illustrates a front view of the paravane in fig. 1;
Fig. 6a illustrates an enlarged view of the dashed box of fig. 3;
Fig. 6b and fig. 6c illustrate how the main skirt may be folded.
Fig. 7 illustrates schematically a boom reel from which the floating barrier system is reeled out from and reeled onto;
Fig. 8 illustrates schematically parts of the floating barrier system reeled onto the boom reel;
Fig. 9a illustrates an alternative embodiment of the floating barrier system of fig. 1;
Fig. 9b illustrates yet an alternative embodiment of the floating barrier system of fig. 1;
Fig. 10a illustrates a top view of an embodiment of one of the lamellas;
Fig. 10b illustrates a top view of an alternative embodiment of one of the lamellas;
Fig. 11 illustrates an alternative embodiment to the one shown in fig. 5.

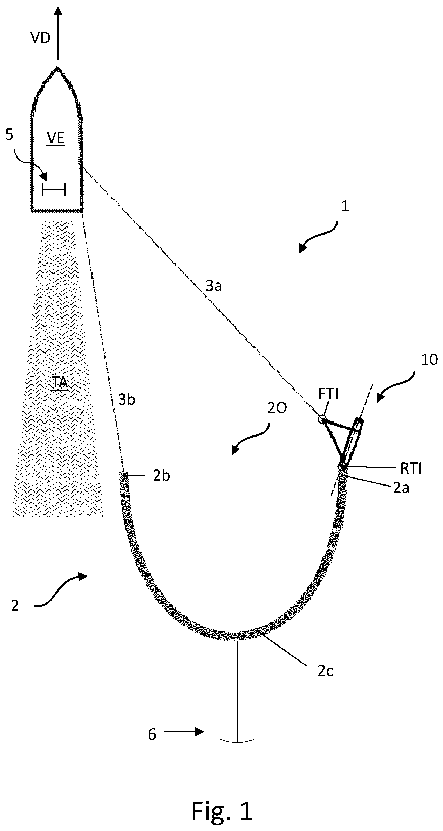

Initially, it is referred to fig. 1, where a barrier system 1 is shown. The barrier system comprises a substantially U-shaped barrier 2 defined with a first end 2a, a second end 2b and an apex 2c. The area between the first end 2a and the second end 2b is referred to as an opening 2O of the barrier 2. The barrier 2 is towed by means of a first towing line 3a and a second towing line 3b connected between the respective ends 2a, 2b of the barrier and a vessel VE.

The barrier system 1 further comprises a paravane 10, which, when the barrier system is towed by the vessel VE, is pulling the first end 2a of the barrier 2 away from the second end 2b of the barrier 2 for the purpose of maintaining the opening 2O wide.

As shown in fig. 1, a boom reel 5 is installed on the stern of the vessel VE.

In the present embodiment, the barrier is an oil boom for collecting oil spill on a water surface.

It should be noted that the paravane 10 may be connected to the first end 2a of the barrier 2 and/or to the first towing line 3a in various ways. This will be described further in detail below. First, the paravane 10 will be described in detail.

### Floating body

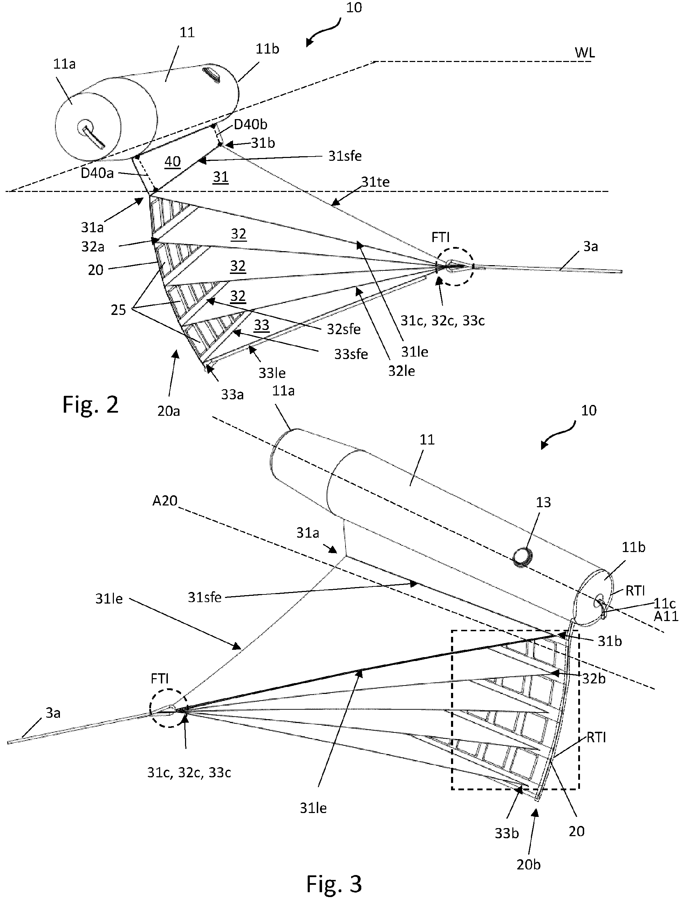

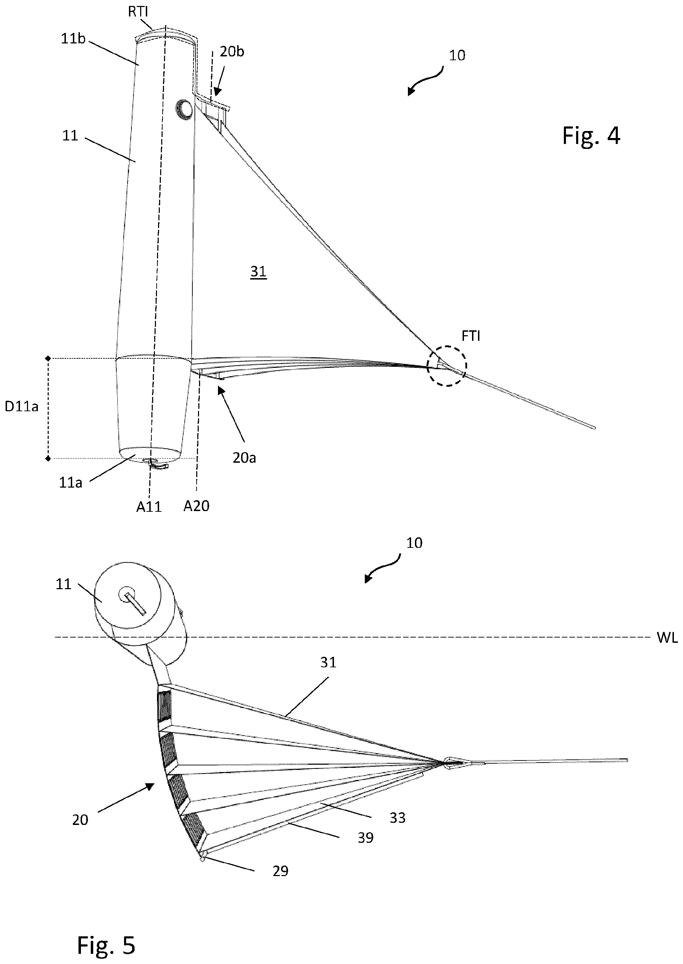

As shown in fig. 3, the paravane 10 comprises an inflatable elongated floating body 11 defined with a longitudinal direction A11 between its front end 11a and its rear end 11b. As shown in fig. 4, the front end 11a of the floating body 11 projects a distance D11a relative other parts of the paravane 10.

The material of the floating body 11 may consist of two fabric layers. First an inner airtight bladder fitted with a valve. Then an outer fabric protecting the inner bladder. The fabrics used in the inner and outer bladder may be a reinforcement weave covered on one or both sides with thermoplastics like polyurethane, polyvinyl chloride, etc. or rubber, nitrile, etc. One or more valves 13 are provided in the floating body 11 for inflating/deflating the floating body 11.

In the rear end 11b, the floating body 11 comprises a rear towing interface RTI (indicated as a dashed area in fig. 3 and fig. 4). This rear towing interface will be described further in detail below.

It should be noted that in the front end 11a of the floating body 11, and in the rear end 11b of the floating body 11, handles indicated as 11c are shown. These handles 11c are used during manual handling of the floating body 11.

### Main skirt

The paravane 10 further comprises a main skirt suspended in the water below the floating body 11. As shown in fig. 2 and fig. 5, the water level WL is indicated by a dashed line, wherein most of the floating body 11 is floating above the water level WL and wherein the entire main skirt 20 is submerged below the water level WL.

The main skirt 20 is substantially rectangular, and is defined with a longitudinal direction A20 between its front end 20a and its rear end 20b.

In the present embodiment, the main skirt 20 is made of two layers of fabric joined together by a welding process. The fabrics used is consisting of a relatively strong reinforcement weave covered on both sides with a mixture of softened polyurethane and polyvinylchloride. The main skirt 20 is non-permeable.

In the present embodiment, the length of the main skirt 20 is 2 meters and height around 1,2 meters.

The rear end 20b of the main skirt 20 may also form a part of the rear towing interface RTI, either alone or together with the rear end 11b of the floating body 11, as indicated by the dashed area RTI in fig. 3 and fig. 4.

### Lamellas

The paravane 10 further comprises a number of lamellas 31, 32, 33. As shown in fig. 2 and 3, the paravane 10 comprises an upper lamella 31, a lower lamella 33 and three intermediate lamellae 32 between the upper lamella 31 and the lower lamella 33.

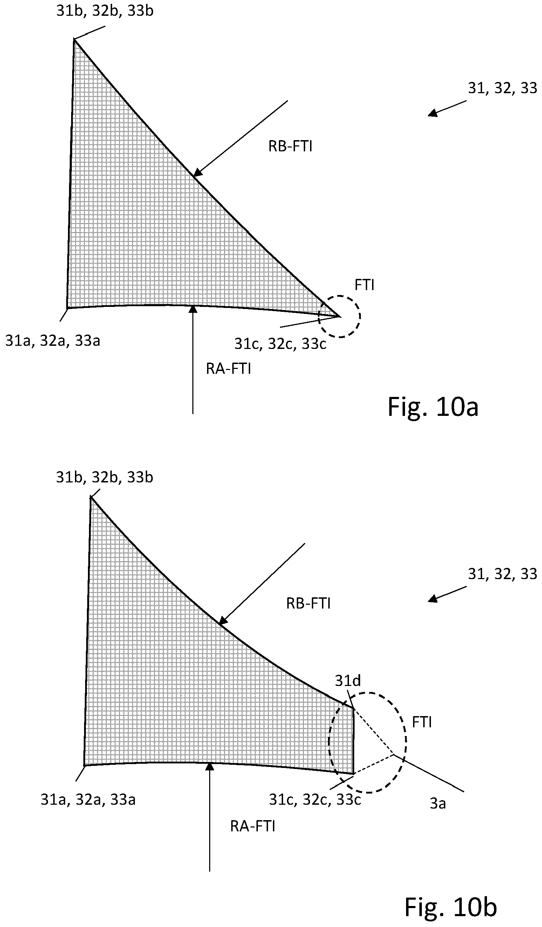

In the present embodiment, the lamellas 31, 32, 33 are of substantially similar size and similar shape, and they are substantially triangular, as best shown in fig. 10a. Here it is shown that each lamella 31, 32, 33 have a first point or corner 31a, 32a, 32c, which is secured to the front end 20a of the main skirt 20, a second point or corner 31b, 32b, 33b, which is secured to the rear end 20b of the main skirt 20, and a third point or corner 31c, 32c, 33c provided at a distance from the main skirt 20. As shown in fig. 2, the third corners 31c, 32c, 33c are gathered in one single point, referred to as a front towing interface FTI. By gathering the corners in one single point, the opening(s) between the lamellas (as seen from the front view in fig. 2 and as seen from the rear view in fig. 3), through which the water flows during towing, has a triangular shape. In other variants, for example where there is used a bridle, the third point of corners 31c, 32c, 33c may not be one single point, but having a vertical and or horizontal distance. This front towing interface FTI is connectable to the first towing line 3a, or connectable to the first end 2a of the barrier 2.

The edge of the lamellas between the first corners 31a, 32a, 33a and the second corners 31b, 32b, 33b may be referred to as skirt facing edges 31sfe, 32sfe, 33sfe. These skirt facing edges 31sfe, 32sfe, 33 sfe are preferably secured continuously to the main skirt 20, due to the relatively large forces transferred between the lamellas and the main skirt 20 during towing and to prevent main skirt 20 from collapsing.

The edge of the lamellas between the first corner 31a, 32a, 33a and the front towing interface FTI, i.e. between the first corner 31a, 32a, 33a and the third corners 31c, 32c, 33c may be referred to as a leading edge 31le, 32le, 33le. These leading edges 31le, 32le, 33le are preferably tensioned during towing. Preferably, the leading edges 31le, 32le, 33le are curved, as indicated by the radius RA-FTI in fig. 10a. This may reduce vibrations in the leading edge during towing. In addition the relatively heavy forces are more distributed when being transferred into the front 20a of the main skirt 20. In addition, the upper leading edge 31le is provided with a flexible , but semi stiff flotation member ensuring that the front towing interface FTI is kept at surface level and at a distance from the floating body to ensure correct tow starting position.

The edge of the lamellas between the second corners 3 1b, 32b, 33b and the front towing interface FTI, i.e. between the second corners 31b, 32b, 33b and the third corners 31c, 32c, 33c may be referred to as trailing edges 31te, 32te, 33te. These trailing edges 31te, 32te, 33te are preferably tensioned during towing. Preferably, also the trailing edges 31te, 32te, 33te are curved, as indicated by the radius RB-FTI in fig. 10a. This may reduce vibrations in the leading edges during towing.

The trailing edges 31te, 32te, 33te may be reinforced by a towing line, rope or webbing etc. to transfer forces between the front towing interface FTI and the rear towing interface RTI and further into barrier first end 2a.

The lamellas 31, 32, 33 are in the present embodiment made of a heavy reinforced perforated fabric. The perforated fabric has 23% opening. Due to the perforations, water is allowed to flow through the lamellas during towing. This evens out pressure built up around the lamellae due to external wave action. It also evens out pressure due to standing waves set up by the paravane 10 itself in different towing speeds. This reduce the probability for the lamellae collapse. The perforation also allows for more water to hit the main skirt 20 and thereby improve the sideways drag efficiency.

### Stiffening plates

The paravane 10 further comprises a plurality of stiffening plates 25 fastened to the main skirt 20. The purpose of the stiffening plates 25 is prevent vertical collapse of the main skirt 10, especially at high towing speed. Practical tests at low towing speed shows that the paravane works without stiffening plates 25. However, when the towing speed is increased above a critical level, the forces acing on the main skirt 20 between two lamellae cause the main skirt 20 to collapse in vertical direction and thereby significantly reducing the area used to produce sideways drag from the paravane. At the same time, the stiffening plates 25 are not considerably reducing the flexibility of the main skirt 20, i.e. the main skirt 20 may still be reeled onto and out from the boom reel 5 and is hence considered flexible.

In the present embodiment, the stiffening plates 25 are of the same rectangular shape and of the same size, with a height H25 of 16 cm, a width W25 of 16 cm. The stiffening plates 25 are cut from an 8 mm thick polyethylene plate. The corners and edges of the rectangular plates 25 are rounded, to prevent them from damaging other parts of the paravane 10 when reeled onto and out from the boom reel 5.

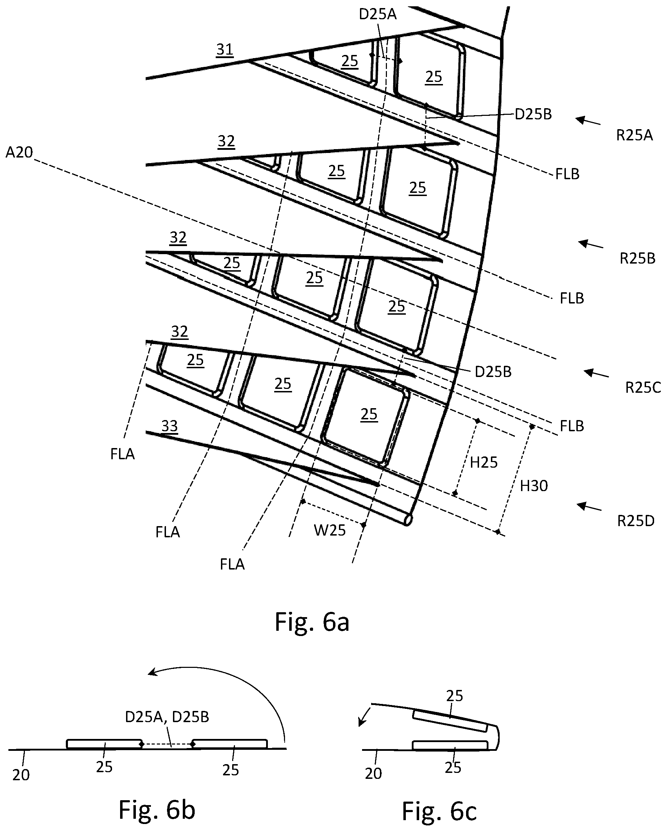

It is now referred to fig. 6a, fig. 6b and fig. 6c. Here it is shown that the stiffening plates 25 are arranged in four rows R25A, R25B, R25C, R25D, each row being located in the areas of the main skirt 20 between each of the lamellas 31, 32, 33. As indicated in fig. 6a, the four rows are substantially oriented in a direction parallel to the longitudinal direction A20 of the main skirt 20. In each row, the stiffening plates 25 are located at a first distance D25A from each other. Between each row, the stiffening plates 25 are located at a second distance D25B from each other.

As illustrated schematically in fig. 6b and fig. 6b, the distances D25A, D25B allow the main skirt 20 to be folded 180° along folding lines FLA, FLB indicated in fig. 6a.

In the present embodiment, the stiffening plates 25 are built into the main skirt 20 between two layers of fabric, wherein the fabric of the main skirt 20 around the stiffening plates are formed by welding the fabrics together.

### Intermediate skirt

The paravane 10 further comprises an intermediate skirt 40 connected between the floating body 11 and the main skirt 20. As indicated in fig. 2, there is a front distance D40a between the front end 20a of the main skirt 20 and the floating body 11 which is longer than a rear distance D40b between the rear end 20b of the main skirt 20 and the floating body 11.

Due to the main skirt 20, the leading edges 31le, 32le, 33le of the lamellas become lower than the trailing edges 31te, 32te, 33te of the respective lamellas. Hence, the lamellas 31, 32, 33 will pull the paravane 10 downwardly in the water during use, preventing the paravane 10 from collapsing or surfacing. Of course, the downwardly directed pulling force created by the orientation of the lamellas due to the intermediate skirt are adjusted to not exceed the upwardly directed force created by the buoyancy of the floating body 11.

As shown in fig. 3, the longitudinal direction A20 of the main skirt 20 is not exactly in parallel with the longitudinal direction A11 of the floating body 11 due to the intermediate skirt 40. Still, the longitudinal direction A20 of the main skirt 20 may be considered to be approximately parallel with the longitudinal direction A11 of the floating body 11.

### Further details of the paravane

The paravane 10 may further comprise a skirt ballast 29 secured to the lower end of the main skirt 20 (shown in fig. 5), and the paravane 10 may further comprise a lamella ballast 39 secured to the lower lamella 33 (shown in fig. 5). The skirt ballast and the lamella ballast may comprise a flexible weight or lead line, i.e. a line to which a number of weight elements (lead or other denser than water elements) are connected or integrated. By connecting the weight elements spaced apart from each other, the skirt ballast and the lamella ballast are considered to be flexible.

It should be noted that the floating body 11, the main skirt 20, the upper lamella 31 and the lower lamella 33 are made of one or more flexible materials, making the entire paravane flexible when the floating body 11 is deflated. It should be noted that even though stiffening plates 25 are secured to the main skirt 20, the paravane is considered flexible within the definition of "flexible" above.

### Paravane 10 as part of the barrier system 1

The barrier system 1 and the paravane 10 have been described above. It is now referred to fig. 1. Here, the front towing interface FTI of the paravane 10 is connected to the vessel VE via the first towing line 3a, and the rear towing interface RTI of the paravane 10 is connected to the first end 2a of the barrier 2.

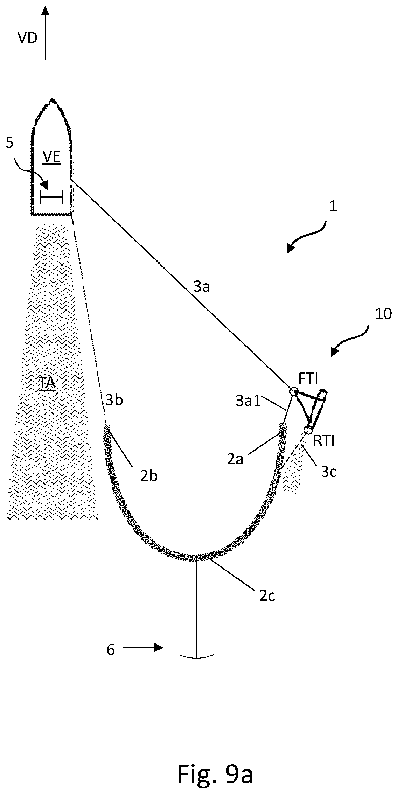

An alternative embodiment is shown in fig. 9a. Here, the front towing interface FTI is connected to the vessel VE via the first towing line 3a and the first end 2a of the barrier 2 is connected to the front towing interface FTI via a first additional towing line 3a1. Optionally, the rear towing interface RTI may be connected to the barrier 2 by means of an elastic towing line 3c. Preferably, this elastic towing line 3c is connected to the barrier 2 a distance from where the first additional towing line 3a1 is connected. It should be noted that the elastic towing line 3c does not contribute during towing, its only purpose is to prevent the paravane 10 from turning into the barrier opening 2O in the initial towing phase or during stops in the towing. Hence, the elastic towing line 3c is preventing a wrong starting position for the paravane 10.

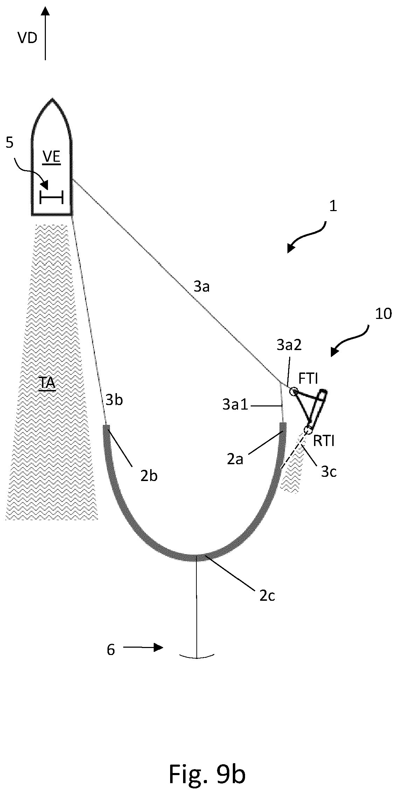

Yet an alternative is shown in fig. 9b. This embodiment is similar to the above embodiment, the differences being that the barrier system 1 comprises a second additional towing line 3a2 between the first towing line 3a and the front towing interface FTI and that the first additional towing line 3a1 is connected to the first towing line 3a instead of to the front towing interface FTI.

Optionally, the additional towing line 3a2 may, also in the form of a bridle with two or more lines, be connected directly from front towing interface FTI to the first end 2a of the barrier. In this case the first towing line 3a is also connected to the first end 2a of the barrier, but not necessarily at the same point.

In fig. 9a and fig. 9b, the paravane 10 will be towed at a distance from the first end 2a of the barrier 2. Hence, it is achieved that turbulence caused by the paravane 10 being towed will occur outside of the barrier 2, i.e. the paravane 10 will not cause turbulence inside the barrier, which could negatively impact for example oil spill collection. Hence, it is assumed that the embodiments shown in fig. 9a and fig. 9b can be towed at higher speed than the embodiment of fig. 1.

In fig. 1, fig. 9a and fig. 9b, turbulence areas are indicated with wavy lines. The vessel turbulence is indicated as a turbulence area TA. It is shown in fig. 1, fig. 9a and fig. 9b that the barrier 2 may be towed outside of the turbulence area TA.

### Deployment of barrier system

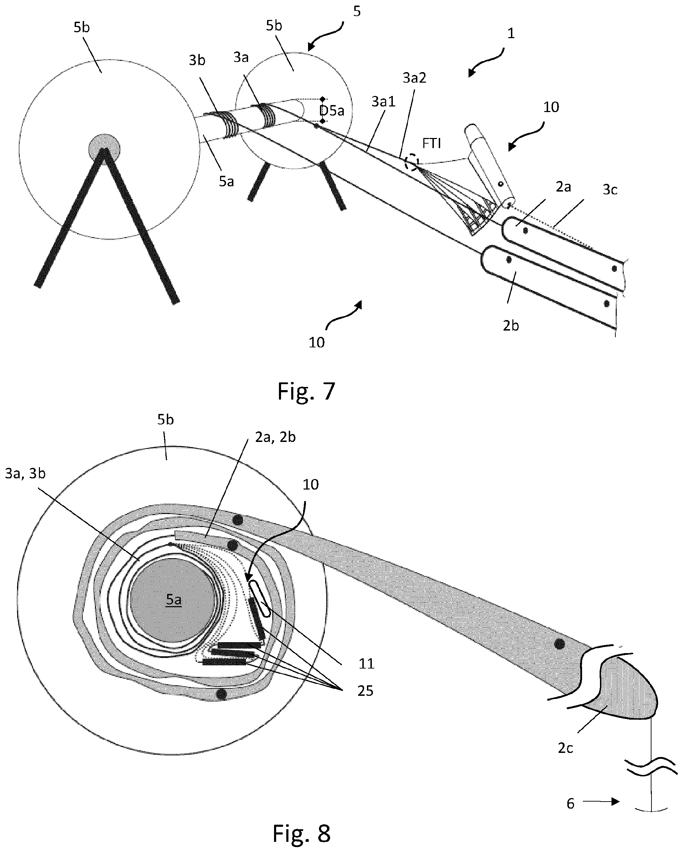

It is now referred to fig. 7 and 8. Here, the boom reel 5 is shown to comprise a boom reel core 5a with flanges 5b in each end thereof. The outer core diameter D5a is indicated in fig. 7 and may be 20 - 100 cm.

In fig. 8, it is shown that the first towing line 3a and the second towing line 3b are reeled onto the core 5a first, i.e. the towing lines 3a, 3b are nearest the core 5a. Then, the paravane 10, the first end 2a of the barrier 2 and the second end 2b of the barrier 2 are reeled onto the core, the first end 2a and the second end 2b being reeled onto the core substantially in parallel (at least when assuming that the length of the first towing line 3a is equal to the length of the second towing line 3b). Due to the flexible properties of the main skirt 20, the deflated floating body 11 and the lamellas 31, 32, 33, schematically indicated in fig. 8 as dotted lines, are folded around stiffening plates 25. Hence, the entire paravane 10 is considered to be flexible. It should be noted that fig. 8 is a schematical illustration only, as the barrier 2 in practice will be tensioned more when reeled onto the core 5a, reducing the space occupied by the paravane 10 in fig. 8 and reducing the space between layers of the barrier 2 outside of the paravane.

Finally, the end 2c of the barrier 2 is reeled onto the core 5a. As indicated in fig. 8, a drag anchor 6 is connected to the end 2c of the barrier 2.

It should be noted that in the present embodiment of the method, the barrier 2 is deployed from the boom reel 5 on the stern of the vessel VE by means of the crew on the vessel VE only. The steps of deploying the barrier from the boom reel 5 will now be described.

In a first step, the drag anchor 6 is released to the water.

Then, vessel VE is moved slowly forward, allowing the drag anchor 6 to gradually pull the apex 2c of the barrier 2 away from the boom reel 5 and out into the water. For each inflation valve of the barrier 2, the barrier 2 is inflated.

As the vessel VE moves further forward, the barrier 2 is reeled out from the boom reel 5 and inflated until the first end 2a and the second end 2b of the barrier 2 are deployed into the water. The paravane 10, as shown in fig. 7, is already connected to the first towing line 3a and to the first end 2a of the barrier 2. The elastic towing line 3c is also indicated in fig. 7. The floating body 11 is inflated and is also deployed into the water.

In a final step, the towing lines 3a, 3b are at least partially deployed to the water. The towing lines 3a, 3b may be secured to the boom reel 5 during the towing. However, they may also be released and secured to the hull of the vessel VE, as indicated in fig. 1, fig. 9a and fig. 9c.

The paravane 10 will, as the barrier 2 and the paravane 10 are towed by the vessel VE, now pull the first end 2a away from the second end 2b and hence increase the opening 2O of the barrier. As is apparent from the description of the method above, no crane is needed.

The opposite steps are performed when retrieving the barrier and paravane from the water. Again, no crane is needed.

According to the above, it is further achieved that the barrier 2 can be towed outside of a turbulence area TA behind the vessel VE. This is an advantage when the barrier 2 is used as an oil boom for collecting oil spill, wherein it is important that the oil spill is floating on top of the water body. In the turbulence area TA, the oil spill tends to mix with the water, and is hence more difficult to collect.

### Alternative embodiments

Some further alternative embodiments will be described below.

In one embodiment, the skirt facing edges 31sfe, 32sfe, 33sfe of the lamellas may be secured to the main skirt 20 at intervals instead of continuously.

It is now referred to fig. 10b. Here, it is shown that the lamellas 31, 32, 33 may comprise fourth corners or points 31d, 32d, 33d provided at a distance from the main skirt 20. The fourth points 31d, 32d, 33d are also connected to the front towing interface FTI. Hence, the lamellas are no longer true triangles. In fig. 10b it is also shown that the third point 31c and the fourth point 31c are connected to the first towing line 3a via a bridle (i.e. two towing lines). It is considered only a matter of definition whether the front towing interface FTI is formed by the points 31c, 31d only or if the front towing interface FTI is formed by the points 31c, 31d together with the bridle.

Similarly, the rear towing interface RTI may be connected to the barrier 2 by means of two or more towing lines, for example two lines connected between the barrier 2 and the rear end 11b of the floating body 11, and two lines connected between the barrier 2 and the rear end 20b of the main skirt 20.

It should be noted that the intermediate skirt 40 is not an essential feature. In an alternative embodiment, the main skirt 20 may be connected directly to the floating body 11. The downwardly directed pulling force may still be obtained by securing the first points 31a, 32a, 33a of the respective lamellas to the main skirt 20 at a point lower than the second point 31b, 32b, 33b of the respective lamellas.

It should be noted that instead of using the drag anchor 6, a further vessel (not shown) may be used to reel out the barrier from the boom reel 5. Other means for providing drag in the barrier 2 may also be used.

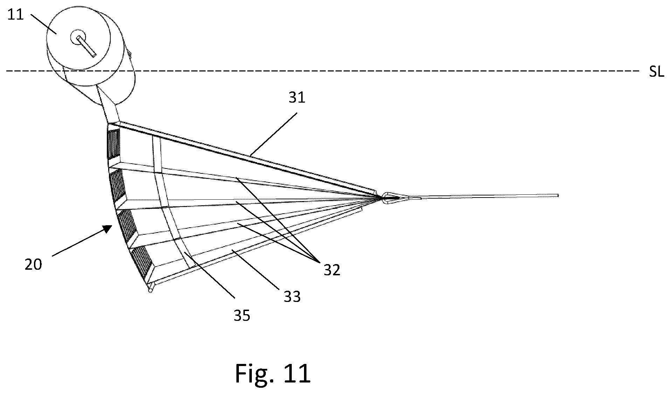

It is now referred to fig. 11. Here it is shown that the paravane 10 further comprises foils 35 connected between the lamellas 31, 32, 33 at a distance from the main skirt 20. The foils 35 reduces how far the lamellas can be pulled away from each other during towing. The foils 35 may be fitted with stiffening plates with equal properties as the stiffening plates 25 in the main skirt 20. In this case the foils 35 will also establish a minimum distance between lamellas 31, 32 and 33. In fig. 11, it is shown that the foils 35 are oriented substantially in parallel with the main skirt 20. The foils 35 are made of a flexible material, such as a permeable, a semipermeable or a non-permeable material.

It should be noted that some of the stiffening plates 25 may be slightly bent during exposure to forces on the boom reel core 5a. Tests show that this does not impact the paravane functionality negatively.

It should further be noted that the above paravane 10 is intended for use on a starboard side of the vessel. It should be noted that a mirrored paravane may be used on a port side of the vessel. Of course, the vessel may use one starboard type of paravane and one port side type of paravane simultaneously, to tow two separate barriers or to tow one wider barrier. It is also possible to use two paravanes 10 on the same side of the barrier, for example a first paravane 10 as shown in fig. 1 (i.e. connected via the rear towing interface to the first end 2a of the barrier) and a second paravane 10 as shown in fig. 9a or 9b.

The embodiments described above are focused on the use of the paravane 10 for an oil spill boom such as high speed Current Buster^{®}, a garbage collecting boom etc.

However, the paravane may also be used during towing of other objects in water, for example fishing gear, such as a trawl.

The paravane 10 will work when operated with a relative speed to the water induced by a towing vessel VE as described above. This relative speed may also me induced by a sea current or river.

## Claims

1. Paravane (10) for a barrier (2) towed by a vessel (VE), wherein the paravane (10) comprises:
- a floating body (11);
- a main skirt (20) suspended below the floating body (11), wherein the main skirt (20) is defined with a longitudinal direction (A20) between its front end (20a) and its rear end (20b);
- an upper lamella (31) having a first point (31a) secured to the front end (20a) of the main skirt (20), a second point (31b) secured to the rear end (20b) of the main skirt (20) and a third point (31c) provided at a distance from the main skirt (20);
- a lower lamella (33) having a first point (33a) secured to the front end (20a) of the main skirt (20) below the upper lamella (31), a second point (33b) secured to the rear end (20b) of the main skirt (20) below the upper lamella (31) and a third point (33c) provided at a distance from the main skirt (20);
- a front towing interface (FTI) connected to the third point (31c) of the upper lamella (31) and the third point (33c) of the lower lamella (33);
wherein the floating body (11), the main skirt (20), the upper lamella (31) and the lower lamella (33) are made of one or more flexible materials; and
wherein the upper lamella (31) has a skirt facing edge (31sfe) defined as the edge between the first point (31a) and the second point (31b), wherein the skirt facing edge (31sfe) is secured continuously or at intervals to the main skirt (20);
wherein the paravane (10) comprises at least one intermediate lamella (32) having a first point (32a) secured to the front end (20a) of the main skirt (20) between the upper lamella (31) and the lower lamella (33), a second point (32b) secured to the rear end (20b) of the main skirt (20) between the upper lamella (31) and the lower lamella (33) and a third point (33c) provided at a distance from the main skirt (20), wherein the third point (33c) is connected to the front towing interface (FTI);
**characterized in that**:
- the paravane (10) comprises a plurality of stiffening plates (25) fastened to the main skirt (20);
- the stiffening plates (25) have a height (H25) being lower than a height (H30) between the lamellae (31, 32, 33);
- the stiffening plates (25) are fastened to the main skirt (20) between the lamellae (31, 32, 33).

2. Paravane (10) according to claim 1, wherein the lower lamella (33) has a skirt facing edge (33sfe) defined as the edge between the first point (33a) and the second point (33b), wherein the skirt facing edge (33sfe) is secured continuously or at intervals to the main skirt (20).

3. Paravane (10) according to claim 1 or 2, wherein the main skirt (20) is made of a non-permeable material.

4. Paravane (10) according to any one of the above claims, wherein the upper lamella (31) and/or the lower lamella (33) are at least partially made of a permeable material.

5. Paravane (10) according to claim 1, wherein the stiffening plates (25) are located at a first distance (D25A) from each other in a first direction.

6. Paravane (10) according to claim 5, wherein the stiffening plates (25) are located at a second distance (D25B) from each other in a second direction different from the first direction.

7. Paravane (10) according to any one of the above claims, wherein the respective third corners (31c, 33c) of the upper and lower lamellas (31, 33) are gathered in one single point.

8. Paravane (10) according to claim 1, wherein the respective third corners (31c. 32c, 33c) of the upper, intermediate and lower lamellas (31, 32, 33) are gathered in one single point.

9. Paravane (10) according to any one of the above claims, wherein the paravane (10) comprises an intermediate skirt (40) connected between the floating body (11) and the main skirt (20), wherein a front distance (D40a) between the front end (20a) of the main skirt (20) and the floating body (11) is longer than a rear distance (D40b) between the rear end (20b) of the main skirt (20) and the floating body (11).

10. Barrier system (1) towable by a vessel (VE), wherein the barrier system (1) comprises:
- a barrier (2) having a first end (2a) and a second end (2b), wherein the second end (2b) is connectable to the vessel (VE);
- a paravane (10) according to any one of the above claims, wherein the front towing interface (FTI) is connectable to the vessel (VE);
wherein the first end (2a) of the barrier (2) is either connected to the front towing interface (FTI) of the paravane (10) or to a rear towing interface (RTI) of the paravane (10).

11. Method for deploying a barrier system (1) from a boom reel (5), wherein the method comprises the following steps:
- reeling out the barrier (2) from a boom reel (5) by pulling an apex (2c) of the barrier (2) away from the boom reel (5);
- reeling out a first end (2a) and a second end (2b) of the barrier (2);
- inflating the barrier (2);
- reeling out a paravane (10) according to any one of claims 1 - 9 from the boom reel (5), wherein the first end (2a) of the barrier (2) is connected to a front towing interface (FTI) of the paravane (10) or to a rear towing interface (RTI) of the paravane (10);
- inflating a floating body (11) of the paravane (10);
- reeling out a first towing line (3a) and second towing line (3b) from the boom reel (5), wherein the first towing line (3a) is connected to the front towing interface (FTI) of the paravane (10) and wherein the second towing line is connected to the second end of the barrier.

12. Method according to claim 11, wherein the method further comprises the initial step of:
- providing the boom reel (5) on a vessel (VE);
- connecting a drag anchor (6) to the apex (2c) of the barrier (2);
- releasing the drag anchor (6) into the water;
- controlling the vessel (VE) to move, thereby causing the drag anchor (6) to reel out the barrier (2) from the boom reel (5).

13. Method for retrieving a barrier system (1) from water, wherein the method comprises the following steps:
- reeling a first towing line (3a) and second towing line (3b) onto a boom reel (5), wherein the first towing line (3a) is connected to a front towing interface (FTI) of a paravane (10) according to any one of claims 1 - 9 and wherein the second towing line is connected to a second end of the barrier; and wherein the first end (2a) of the barrier (2) is connected to a front towing interface (FTI) of the paravane (10) or to a rear towing interface (RTI) of the paravane (10);
- deflating a floating body (11) of the paravane (10);
- reeling the paravane (10) onto the boom reel (5);
- deflating the barrier (2);
- reeling the barrier (2) onto the boom reel (5).

## Patentansprüche

1. Paravan (10) für eine Barriere (2), die durch ein Schiff (VE) geschleppt wird, wobei der Paravan (10) Folgendes umfasst:
- einen Schwimmkörper (11);
- eine Hauptschürze (20), die unter dem Schwimmkörper (11) aufgehängt ist, wobei die Hauptschürze (20) mit einer Längsrichtung (A20) zwischen ihrem vorderen Ende (20a) und ihrem hinteren Ende (20b) definiert ist;
- eine obere Lamelle (31) mit einem ersten Punkt (31a), der an dem vorderen Ende (20a) der Hauptschürze (20) befestigt ist, einem zweiten Punkt (31b), der an dem hinteren Ende (20b) der Hauptschürze (20) befestigt ist, und einem dritten Punkt (31c), der in einem Abstand von der Hauptschürze (20) bereitgestellt ist;
- eine untere Lamelle (33) mit einem ersten Punkt (33a), der an dem vorderen Ende (20a) der Hauptschürze (20) unter der oberen Lamelle (31) befestigt ist, einem zweiten Punkt (33b), der an dem hinteren Ende (20b) der Hauptschürze (20) unter der oberen Lamelle (31) befestigt ist, und einem dritten Punkt (33c), der in einem Abstand von der Hauptschürze (20) bereitgestellt ist;
- eine vordere Schleppschnittstelle (FTI), die mit dem dritten Punkt (31c) der oberen Lamelle (31) und dem dritten Punkt (33c) der unteren Lamelle (33) verbunden ist;
wobei der Schwimmkörper (11), die Hauptschürze (20), die obere Lamelle (31) und die untere Lamelle (33) aus einem oder mehreren flexiblen Materialien hergestellt sind; und
wobei die obere Lamelle (31) eine der Schürze zugewandte Kante (31sfe) aufweist, die als die Kante zwischen dem ersten Punkt (31a) und dem zweiten Punkt (31b) definiert ist, wobei die der Schürze zugewandte Kante (31sfe) kontinuierlich oder in Intervallen an der Hauptschürze (20) befestigt ist;
wobei der Paravan (10) mindestens eine mittlere Lamelle (32) mit einem ersten Punkt (32a), der an dem vorderen Ende (20a) der Hauptschürze (20) zwischen der oberen Lamelle (31) und der unteren Lamelle (33) befestigt ist, einem zweiten Punkt (32b), der an dem hinteren Ende (20b) der Hauptschürze (20) zwischen der oberen Lamelle (31) und der unteren Lamelle (33) befestigt ist, und einem dritten Punkt (33c), der in einem Abstand von der Hauptschürze (20) bereitgestellt ist, umfasst, wobei der dritte Punkt (33c) mit der vorderen Schleppschnittstelle (FTI) verbunden ist;
**dadurch gekennzeichnet, dass**
- der Paravan (10) eine Vielzahl von Versteifungsplatten (25) umfasst, die an der Hauptschürze (20) fixiert sind;
- die Versteifungsplatten (25) eine Höhe (H25) aufweisen, die niedriger ist als eine Höhe (H30) zwischen den Lamellen (31, 32, 33);
- die Versteifungsplatten (25) zwischen den Lamellen (31, 32, 33) an der Hauptschürze (20) fixiert sind.

2. Paravan (10) nach Anspruch 1, wobei die untere Lamelle (33) eine der Schürze zugewandte Kante (33sfe) aufweist, die als die Kante zwischen dem ersten Punkt (33a) und dem zweiten Punkt (33b) definiert ist, wobei die der Schürze zugewandte Kante (33sfe) kontinuierlich oder in Intervallen an der Hauptschürze (20) befestigt ist.

3. Paravan (10) nach Anspruch 1 oder 2, wobei die Hauptschürze (20) aus einem undurchlässigen Material hergestellt ist.

4. Paravan (10) nach einem der vorhergehenden Ansprüche, wobei die obere Lamelle (31) und/oder die untere Lamelle (33) mindestens teilweise aus einem durchlässigen Material hergestellt sind.

5. Paravan (10) nach Anspruch 1, wobei sich die Versteifungsplatten (25) in einer ersten Richtung in einem ersten Abstand (D25A) voneinander befinden.

6. Paravan (10) nach Anspruch 5, wobei sich die Versteifungsplatten (25) in einer zweiten Richtung, die sich von der ersten Richtung unterscheidet, in einem zweiten Abstand (D25B) voneinander befinden.

7. Paravan (10) nach einem der vorhergehenden Ansprüche, wobei sich die jeweiligen dritten Ecken (31c, 33c) der oberen und der unteren Lamelle (31, 33) in einem einzigen Punkt treffen.

8. Paravan (10) nach Anspruch 1, wobei sich die jeweiligen dritten Ecken (31c, 32c, 33c) der oberen, der mittleren und der unteren Lamelle (31, 32, 33) in einem einzigen Punkt treffen.

9. Paravan (10) nach einem der vorhergehenden Ansprüche, wobei der Paravan (10) eine mittlere Schürze (40) umfasst, die zwischen dem Schwimmkörper (11) und der Hauptschürze (20) verbunden ist, wobei ein vorderer Abstand (D40a) zwischen dem vorderen Ende (20a) der Hauptschürze (20) und dem Schwimmkörper (11) länger als ein hinterer Abstand (D40b) zwischen dem hinteren Ende (20b) der Hauptschürze (20) und dem Schwimmkörper (11) ist.

10. Barrieresystem (1), das durch ein Schiff (VE) schleppbar ist, wobei das Barrieresystem (1) Folgendes umfasst:
- eine Barriere (2), die ein erstes Ende (2a) und ein zweites Ende (2b) aufweist, wobei das zweite Ende (2b) mit dem Schiff (VE) verbindbar ist;
- einen Paravan (10) nach einem der vorhergehenden Ansprüche, wobei die vordere Schleppschnittstelle (FTI) mit dem Schiff (VE) verbindbar ist;
wobei das erste Ende (2a) der Barriere (2) entweder mit der vorderen Schleppschnittstelle (FTI) des Paravans (10) oder mit einer hinteren Schleppschnittstelle (RTI) des Paravans (10) verbunden ist.

11. Verfahren zum Ausbringen eines Barrieresystems (1) von einer Auslegerrolle (5), wobei das Verfahren die folgenden Schritte umfasst:
- Abwickeln der Barriere (2) von einer Auslegerrolle (5), indem ein Scheitelpunkt (2c) der Barriere (2) von der Auslegerrolle (5) weggezogen wird;
- Abwickeln eines ersten Endes (2a) und eines zweiten Endes (2b) der Barriere (2);
- Aufblasen der Barriere (2);
- Abwickeln eines Paravans (10) nach einem der Ansprüche 1-9 von der Auslegerrolle (5), wobei das erste Ende (2a) der Barriere (2) mit einer vorderen Schleppschnittstelle (FTI) des Paravans (10) oder mit einer hinteren Schleppschnittstelle (RTI) des Paravans (10) verbunden ist;
- Aufblasen eines Schwimmkörpers (11) des Paravans (10);
- Abwickeln einer ersten Schleppleine (3a) und einer zweiten Schleppleine (3b) von der Auslegerrolle (5), wobei die erste Schleppleine (3a) mit der vorderen Schleppschnittstelle (FTI) des Paravans (10) verbunden ist und wobei die zweite Schleppleine mit dem zweiten Ende der Barriere verbunden ist.

12. Verfahren nach Anspruch 11, wobei das Verfahren ferner den folgenden Anfangsschritt umfasst:
- Bereitstellen der Auslegerrolle (5) auf einem Schiff (VE);
- Verbinden eines Triebankers (6) mit dem Scheitelpunkt (2c) der Barriere (2);
- Freigeben des Triebankers (6) in das Wasser;
- Steuern des Schiffes (VE) zur Bewegung, wodurch bewirkt wird, dass der Triebanker (6) die Barriere (2) von der Auslegerrolle (5) abwickelt.

13. Verfahren zum Einholen eines Barrieresystems (1) aus dem Wasser, wobei das Verfahren die folgenden Schritte umfasst:
- Aufwickeln einer ersten Schleppleine (3a) und einer zweiten Schleppleine (3b) auf eine Auslegerrolle (5), wobei die erste Schleppleine (3a) mit einer vorderen Schleppschnittstelle (FTI) eines Paravans (10) nach einem der Ansprüche 1-9 verbunden ist und wobei die zweite Schleppleine mit einem zweiten Ende der Barriere verbunden ist; und wobei das erste Ende (2a) der Barriere (2) mit einer vorderen Schleppschnittstelle (FTI) des Paravans (10) oder mit einer hinteren Schleppschnittstelle (RTI) des Paravans (10) verbunden ist;
- Entleeren eines Schwimmkörpers (11) des Paravans (10);
- Aufwickeln des Paravans (10) auf die Auslegerrolle (5);
- Entleeren der Barriere (2);
- Aufwickeln der Barriere (2) auf die Auslegerrolle (5).

## Revendications

1. Paravane (10) pour barrière (2) remorquée par un navire (VE), dans lequel le paravane (10) comprend :
- un corps flottant (11) ;
- une jupe principale (20) suspendue sous le corps flottant (11), dans lequel la jupe principale (20) est définie par une direction longitudinale (A20) entre son extrémité avant (20a) et son extrémité arrière (20b) ;
- une lamelle supérieure (31) comportant un premier point (31a) fixé à l'extrémité avant (20a) de la jupe principale (20), un deuxième point (31b) fixé à l'extrémité arrière (20b) de la jupe principale (20) et un troisième point (31c) prévu à distance de la jupe principale (20) ;
- une lamelle inférieure (33) comportant un premier point (33a) fixé à l'extrémité avant (20a) de la jupe principale (20) sous la lamelle supérieure (31), un deuxième point (33b) fixé à l'extrémité arrière (20b) de la jupe principale (20) sous la lamelle supérieure (31) et un troisième point (33c) prévu à distance de la jupe principale (20) ;
- une interface de remorquage avant (FTI) reliée au troisième point (31c) de la lamelle supérieure (31) et au troisième point (33c) de la lamelle inférieure (33) ;
dans lequel le corps flottant (11), la jupe principale (20), la lamelle supérieure (31) et la lamelle inférieure (33) sont constitués d'un ou de plusieurs matériaux souples ; et
dans lequel la lamelle supérieure (31) comporte un bord faisant face à la jupe (31sfe) défini comme le bord entre le premier point (31a) et le deuxième point (31b), dans lequel le bord faisant face à la jupe (31sfe) est fixé de manière continue ou par intervalles à la jupe principale (20) ;
dans lequel la paravane (10) comprend au moins une lamelle intermédiaire (32) comportant un premier point (32a) fixé à l'extrémité avant (20a) de la jupe principale (20) entre la lamelle supérieure (31) et la lamelle inférieure (33), un deuxième point (32b) fixé à l'extrémité arrière (20b) de la jupe principale (20) entre la lamelle supérieure (31) et la lamelle inférieure (33) et un troisième point (33c) prévu à distance de la jupe principale (20), dans lequel le troisième point (33c) est relié à l'interface de remorquage avant (FTI) ;
**caractérisé en ce que**
- le paravane (10) comprend une pluralité de plaques de raidissement (25) attachées à la jupe principale (20) ;
- les plaques de raidissement (25) comportent une hauteur (H25) inférieure à une hauteur (H30) entre les lamelles (31, 32, 33) ;
- les plaques de raidissement (25) sont attachées à la jupe principale (20) entre les lamelles (31, 32, 33).

2. Paravane (10) selon la revendication 1, dans lequel la lamelle inférieure (33) comporte un bord faisant face à la jupe (33sfe) défini comme le bord entre le premier point (33a) et le deuxième point (33b), dans lequel le bord faisant face à la jupe (33sfe) est fixé de manière continue ou par intervalles à la jupe principale (20).

3. Paravane (10) selon la revendication 1 ou 2, dans lequel la jupe principale (20) est constituée d'un matériau non perméable.

4. Paravane (10) selon l'une quelconque des revendications précédentes, dans lequel la lamelle supérieure (31) et/ou la lamelle inférieure (33) sont au moins partiellement constituées d'un matériau perméable.

5. Paravane (10) selon la revendication 1, dans lequel les plaques de raidissement (25) sont situées à une première distance (D25A) les une des autres dans une première direction.

6. Paravane (10) selon la revendication 5, dans lequel les plaques de raidissement (25) sont situées à une seconde distance (D25B) les unes des autres dans une seconde direction différente de la première direction.

7. Paravane (10) selon l'une quelconque des revendications précédentes, dans lequel les troisièmes coins respectifs (31c, 33c) des lamelles supérieure et inférieure (31, 33) sont rassemblés en un seul point.

8. Paravane (10) selon la revendication 1, dans lequel les troisièmes coins respectifs (31c, 32c, 33c) des lamelles supérieure, intermédiaire et inférieure (31, 32, 33) sont rassemblés en un seul point.

9. Paravane (10) selon l'une quelconque des revendications précédentes, dans lequel le paravane (10) comprend une jupe intermédiaire (40) reliée entre le corps flottant (11) et la jupe principale (20), dans lequel une distance avant (D40a) entre l'extrémité avant (20a) de la jupe principale (20) et le corps flottant (11) est plus longue qu'une distance arrière (D40b) entre l'extrémité arrière (20b) de la jupe principale (20) et le corps flottant (11).

10. Système de barrière (1) remorquable par un navire (VE), dans lequel le système de barrière (1) comprend :
- une barrière (2) comportant une première extrémité (2a) et une seconde extrémité (2b), dans lequel la seconde extrémité (2b) peut être reliée au navire (VE) ;
- un paravane (10) selon l'une quelconque des revendications précédentes, dans lequel l'interface de remorquage avant (FTI) peut être reliée au navire (VE) ;
dans lequel la première extrémité (2a) de la barrière (2) est reliée soit à l'interface de remorquage avant (FTI) du paravane (10), soit à une interface de remorquage arrière (RTI) du paravane (10).

11. Procédé pour déployer un système de barrière (1) à partir d'une bobine de flèche (5), dans lequel le procédé comprend les étapes suivantes :
- le déroulement de la barrière (2) à partir d'une bobine de flèche (5) en tirant un sommet (2c) de la barrière (2) à l'écart de la bobine de flèche (5) ;
- le déroulement d'une première extrémité (2a) et d'une seconde extrémité (2b) de la barrière (2) ;
- le gonflage de la barrière (2) ;
- le déroulement d'un paravane (10) selon l'une quelconque des revendications 1 à 9 à partir de la bobine de flèche (5), dans lequel la première extrémité (2a) de la barrière (2) est reliée à une interface de remorquage avant (FTI) du paravane (10) ou à une interface de remorquage arrière (RTI) du paravane (10) ;
- le gonflage d'un corps flottant (11) du paravane (10) ;
- le déroulement d'une première ligne de remorquage (3a) et d'une seconde ligne de remorquage (3b) à partir de la bobine de flèche (5), dans lequel la première ligne de remorquage (3a) est reliée à l'interface de remorquage avant (FTI) du paravane (10) et dans lequel la seconde ligne de remorquage est reliée à la seconde extrémité de la barrière.

12. Procédé selon la revendication 11, dans lequel le procédé comprend en outre l'étape initiale suivante :
- la mise à disposition de la bobine de flèche (5) sur un navire (VE) ;
- la liaison d'un ancrage de traînée (6) au sommet (2c) de la barrière (2) ;
- la libération de l'ancre de traînée (6) dans l'eau ;
- la commande d'un déplacement du navire (VE), amenant ainsi l'ancre de traînée (6) à dérouler la barrière (2) à partir de la bobine de flèche (5).

13. Procédé pour récupérer un système de barrière (1) à partir d'eau, dans lequel le procédé comprend les étapes suivantes :
- l'enroulement d'une première ligne de remorquage (3a) et d'une seconde ligne de remorquage (3b) sur une bobine de flèche (5), dans lequel la première ligne de remorquage (3a) est reliée à une interface de remorquage avant (FTI) d'un paravane (10) selon l'une quelconque des revendications 1 à 9 et dans lequel la seconde ligne de remorquage est reliée à une seconde extrémité de la barrière ; et dans lequel la première extrémité (2a) de la barrière (2) est reliée à une interface de remorquage avant (FTI) du paravane (10) ou à une interface de remorquage arrière (RTI) du paravane (10) ;
- le dégonflage d'un corps flottant (11) du paravane (10) ;
- l'enroulement du paravane (10) sur la bobine de flèche (5) ;
- le dégonflage de la barrière (2) ;
- l'enroulement de la barrière (2) sur la bobine de flèche (5).
